# EUROPEAN PATENT APPLICATION

(11) **EP 2 996 049 A1**
(43) Date of publication of application: **16.03.2016**
(21) Application number: 14306404.6
(22) Date of filing: 12.09.2014
(51) Int. Cl.: G06F 17/30

(54) **System, method and computer program product for injecting directly into a web browser commands and/or contents created on local desktop applications of a computer device, and vice-versa**

(71) Applicant: Kubity, 75008 Paris (FR)
(72) Inventor: Bailly, Jean-Pierre, 78260 Acheres (FR); Checinski, Alexandre, 75019 Paris (FR); Gora, Romain, 92600 Asnieres sur Seine (FR); Gully, Raphael, 75010 Paris (FR); Jobbe-Duval, Hervé, 75017 Paris (FR); Schoner, Nicolas, 92360 Chatillon (FR); Seccia, Sylvain, 75002 Paris (FR); Vasseur, Nicolas, 92700 Colombes (FR)
(74) Representative: Lopez, Frédérique

(57) **Abstract**

A method of handling content in a computer device is described. In particular, the method allows creating on a computer device a model with a local application and transferring the model directly into a local web browser of the computer device and vice-versa, without any transfer of data via a distant server, or without any local disk transfer on the computer device.

## Description

### Field of the Invention

The present invention relates generally to the field of data transfer and more particularly relates to a system, method and computer program product for injecting directly into a web browser commands and/or contents created on local desktop applications of a computer device, and vice-versa.

### Background Art

In the Internet era, web browsers are the most used applications and the majority of users spend most of their computer time on the web. Single page web applications are applications that fit on a web page with the goal of providing a more fluid user experience akin to a desktop application. All the necessary code is retrieved with a single page load or the appropriate resources are dynamically loaded and added to the page as necessary, usually in response to user actions.

Interaction with a single page application often involves dynamic communication with a web server behind the scenes. However, editing images, sounds, videos or multi-dimensional content is still a task best left to desktop applications.

In order to share on the Internet content produced locally, a user needs to upload it on a server. Uploading to a server any content, such as images, sounds, videos or 3D models, has a high cost in terms of time and computing. If a user wants to preview the content inside the web browser and then confirm the upload with a known regular approach, this takes a roundtrip that relies on the available bandwidth and the server load.

Another alternative to share on the Internet a locally produced content is to transfer to the web browser the content as a graphic file. However, graphic files, namely those known as « .fbx, .obj, or .dae » files occupy huge space data that prevent using this solution.

Yet another approach is to use a real time editor to adapt to the Internet web navigator, the locally produced content. However, such solution which requires specific skills to develop the mapping between the original content and the internet content, prevents using it by any non expert final user.

Then there is a need for a system and a method which overcome the limitations of the prior art for injecting directly into web browsers, any content created locally on desktop applications. The present invention offers a solution to this need.

### Summary of the invention

Accordingly, an object of the invention is to provide a system and a method allowing a direct injection of data, content and/or commands from a desktop application to a web browser application and vice-versa which does not require access or use of neither a distant server, nor any files transfer.

Advantageously, the present invention offers a simple solution allowing to visualize rapidly in a dynamic environment, such as with a web navigator, multi-dimensional models created in a static environment, such as with a local desktop application.

To achieve the foregoing object, a system, method and computer program product as further described in the appended independent claims 1, 15 and 16 are provided.

In particular, a computer-implemented method of handling an original content generated with a desktop application operative on a computer device, the method comprises the steps of:
- receiving a query to transfer the original content to a web browser, wherein the web browser being operated on the computer device
- communicating said query to a software application, wherein said software application being operated on said computer device;
- executing said query by said software application on said computer device;
   and
- communicating by said software application the result of the executed query to said web browser.

Advantageously, the communication between the software application and the web browser is exclusively executed locally on said computer device.

In an embodiment, the communication between the software application and the web browser is operated without any local disk transfer.

In an embodiment, the query comprises data and/or commands.

In another embodiment, the executing step comprises the steps of encapsulating the data.

Still advantageously, the method further comprises the step of displaying the result of the executed query on a web browser user interface of the computer device.

Advantageously, the web browser comprises a plurality of tools and functions to enrich a scene around the original content.

In an embodiment, the executing step comprises the step of simplifying the original content by the software application.

Advantageously, the simplification is performed by using predefined heuristics.

Still advantageously, the simplification is associated with a plurality of simplified versions of the original content, each simplified version being associated with a predefined level of detail.

In an embodiment, the method further comprises the step of having the web browser communicating a publishing command to a distant server.

In an embodiment, the original content is a 3D content.

Advantageously, the communication step is performed with a WebSocket protocol.

Advantageously, the software application is a plug-in.

The invention also provides a system for handling an original content generated with a desktop application operative on a computer device, comprising means adapted to carry out the steps of the method.

The invention may also be provided as a computer program product comprising a non-transitory computer readable storage medium, and program code stored on the computer readable storage medium and configured, upon execution, to cause the processor to operate the steps of the method.

Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the figures wherein:
Figure 1 shows a general environment for implementing the system of the present invention;
Figure 2 is a flow chart for a set-up process in accordance with an embodiment of the present invention;
Figure 3 is a flow chart for a process of handling a content transfer request in accordance with an embodiment of the present invention;
Figure 4 is a flow chart for a process of handling notifications in accordance with an embodiment of the present invention;
Figures 5a and 5b illustrate an example of a transfer of an original content to a web browser in accordance with an embodiment of the present invention.

### Detailed description of the invention

Embodiments of the invention are generally directed to systems, methods, and computer program products for handling content in computer devices. The term 'content' as used in the description is to be indifferently understood as data or commands, as well as multi-dimensional content.

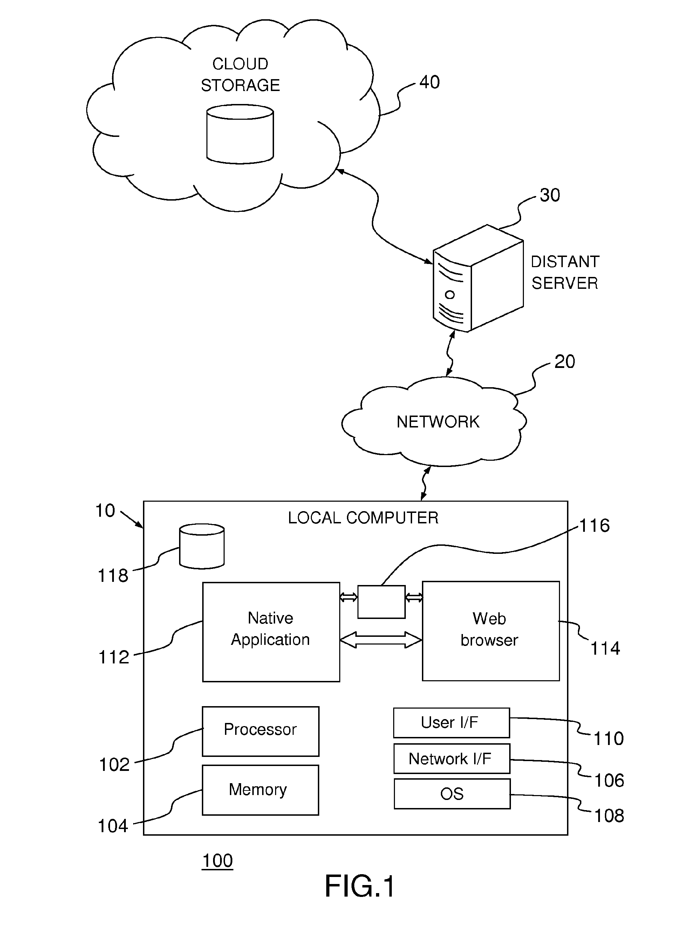

With reference to FIG. 1, an operating environment 100 may include one or more computer devices 10 coupled to a network 20. The network 20 may include one or more private and/or public networks, e.g. the Internet, enabling communication and exchange of data with one or more distant servers 30. The distant server 30 may be coupled to storage servers 40 to store and retrieve data from the computer devices 10. The storage servers 40 may be servers of the type "cloud server" allowing storing data in the so-called cloud. The local computer device 10 shows the main components to operate the present invention. The local computer device includes at least one processor 102 and a memory 104 coupled to the at least one processor 102. The memory 104 may represent a random access memory (RAM) as well as any supplemental levels of memory, e.g., cache memories, non-volatile or backup memories (e.g., programmable or flash memories), read-only memories, etc. In addition, memory 104 may be considered to include memory storage physically, e.g., any cache memory in a microprocessor, as well as any storage capacity used as a virtual memory, e.g., as stored on a mass storage device or on another computer coupled to the local computer device 10.

For interface with a user or operator, the local computer device 10 may include a user interface 110 incorporating one or more user input/output devices, e.g., a keyboard, a pointing device, a display, a printer, etc. Otherwise, data may be communicated to and from another computer over a network interface 106 coupled to the communication network 20. The local computer device 10 also may be in communication with one or more mass storage devices, which may be, for example, internal hard disk storage devices, external hard disk storage devices, external databases, storage area network devices, etc.

The local computer device 10 typically operates under the control of an operating system 108 and executes or otherwise relies upon various computer software applications, components, programs, objects, modules, engines, data structures, etc. In particular, the components may include a local native application 112, a local data injection component 116, a local web application browser 114, and may comprise instructions that may be resident and/or stored in the memory 104. For example, the local native application may be the known Google Sketch Up® application or the Blender® application or the Autodesk Revit® and the local web browser may be Firefox®, Internet Explorer®, Safari® or Google Chrome® to name a few. It is underlined that in the multi-dimensional content handling process of the present invention, both the native application and the web browser are executed locally without the need for a distant or remote server. The multi-dimensional content data transfer is executed between the local native application 112 and the local web browser 114 with a direct software-to-software communication through the local data injection component 116. In one embodiment this direct communication is performed using a WebSocket protocol as defined in the Request for Comment RFC6455 provided by the Internet Engineering Task Force (IETF).

The local computer device 10 may also include one or more databases including, for example, a multi-dimensional record database 118. The multi-dimensional record database 118 may comprise data and supporting data structures that store and organize multi-dimensional data. In an embodiment, data is encoded in JSON language or alternatively in binary and compressed in the "gzip" format. The database 118 may be arranged with any database organization and/or structure including, but not limited to, a relational database, a hierarchical database, a network database, and/or combinations thereof. A database management system in the form of a computer software application executing as instructions on the processing unit of the local computer device 10 may be used to access information or data stored as records of the multi-dimensional record database 118.

Moreover, various applications, components, programs, objects, modules, engines etc. may also execute on one or more processors in another computer coupled to the local computer device 10 via the communication network 20, e.g., in a distributed or client-server computing environment, whereby the processing required to implement the functions of a computer program may be allocated to multiple computers over a network. For example, some of the functionality described herein as being incorporated into the local computer device 10 may be implemented in one or more servers. Consistent with embodiments of the invention, the modules, applications, components and/or engines may be executing on one or more servers and may cause the processor 102 to perform operations consistent with embodiments of the invention.

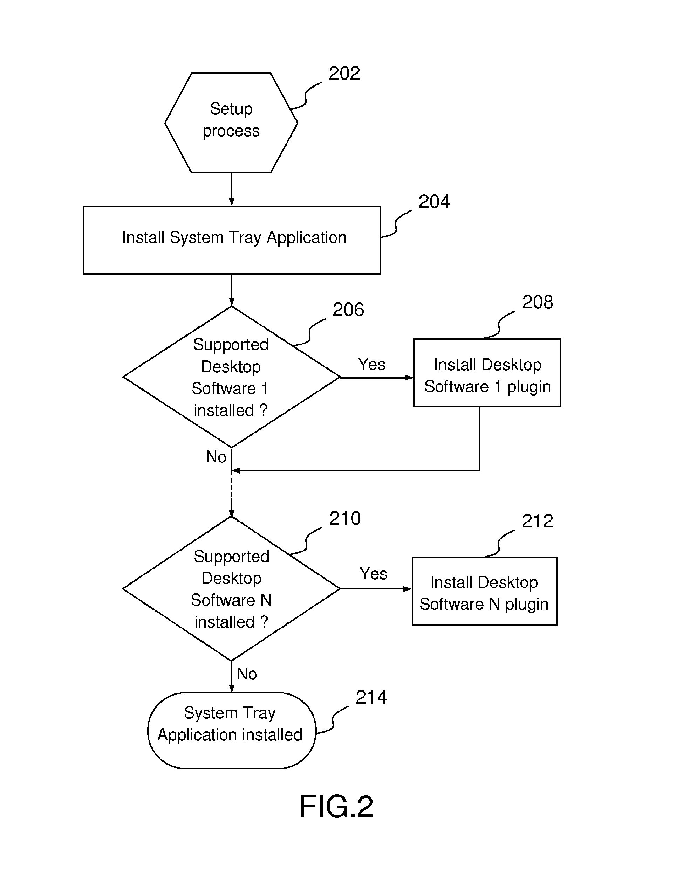

Figure 2 is a flow chart for a setup process in accordance with an embodiment of the present invention. The process begins 202 when a user request installation on the local computer device 10 of system tray application 204. The setup process allows determining (206, 210) if a local native application is already installed on the local computer device, and to install (208, 212) then the respective local data injection component. In an embodiment, the local data injection component is in the form of a desktop software application enhanced with a plug-in that is activated through the system tray application when a multi-dimensional content transfer is requested.

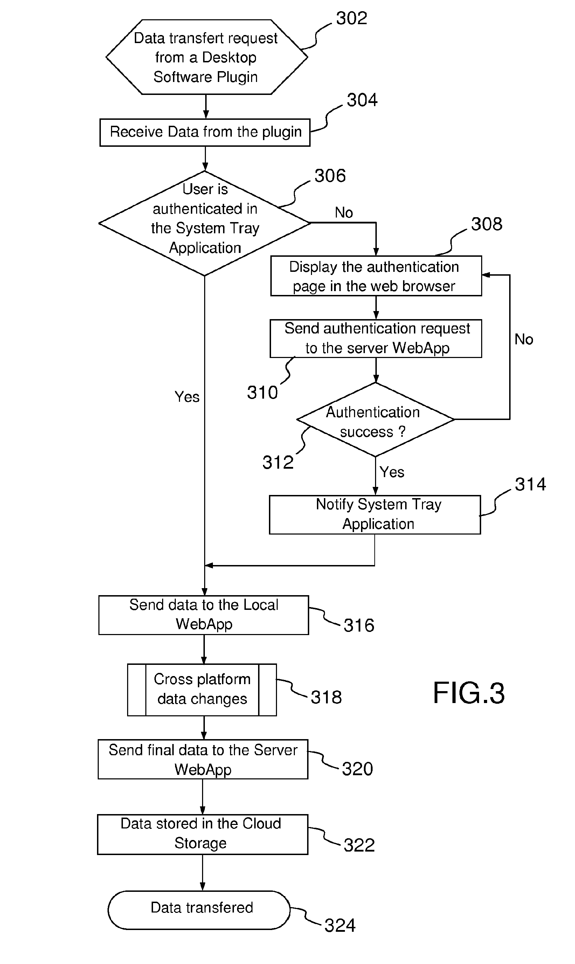

Figure 3 is a flow chart for a process performed at the local computer device 10 of handling a multi-dimensional content request in accordance with an embodiment of the present invention. A data transfer request 302 is received. The data transfer query may comprise multi-dimensional data and/or commands to transfer data generated from a local native application to a local web browser. The commands may be any kind of commands such as to change a display mode or to disable a function for example.

Next, at step 304, the local data injection component associated to the local native application may access locally the data to be transferred.

In a next step 306, the process allows determining if a user is authenticated in the system tray application. If yes, the process goes to a next step 316, otherwise if not, the process allows displaying an authentication page in the web browser 308 and sending an authentication request to a distant web application server 310. When the authentication is performed successfully 312, the local system tray application is notified 314, allowing the process to continue 316.

On step 316, after authentication of the user, the process allows the local data injection component to execute the query and to have the data be sent directly to the local web browser 114. The user then may have the data be displayed on a web browser user interface of the local computer device.

In an embodiment, the execution of the data transfer query comprises the data extraction from the local native application by the local injection component and data encapsulation before the transfer.

Patent application titled "System, method and computer program product for automatic optimization of 3d textured models for network transfer and real-time rendering" filed the same day by the Applicant provides a detailed description of various embodiments for the extraction and preparation of data for the direct transfer of the present invention. In one embodiment, the preparation of data comprises a simplification operation of a 3D model, performed by using predefined heuristics. Preferably, the simplification is associated with a plurality of simplified versions of the 3D model, each simplified version being associated with a predefined level of detail.

It is to be appreciated that the present invention allows a direct injection of data created with a local application into a local web application in few steps without, as for prior art, the need to have a transfer of data via a distant server or the need of a local disk transfer.

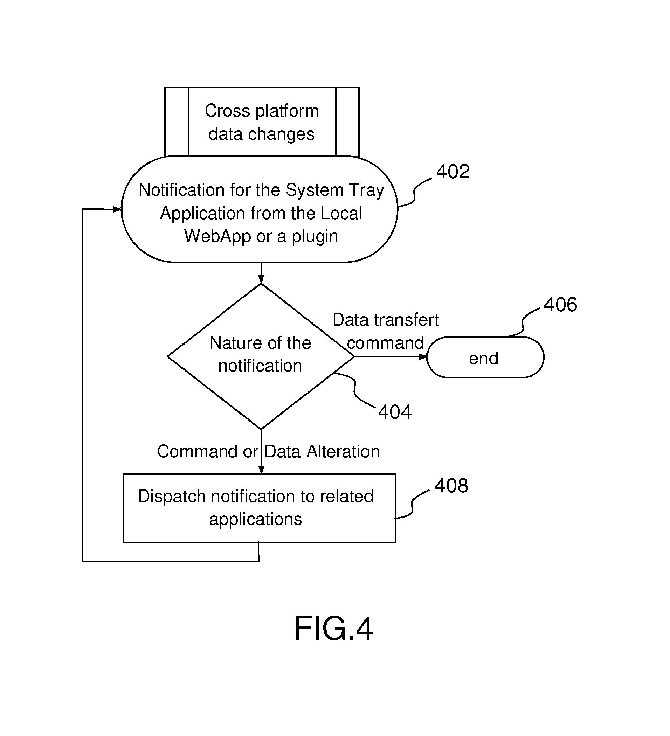

Once the content is available on the local web application 316, the process allows handling any cross platform data changes 318, as detailed now with reference to figure 4.

On a step 402, a notification from the local web application informs the system tray application of an upcoming event. On a next step 404, the process allows determining the nature of the notification to determine if it is a data transfer or a data alteration or a command. If the notification relies on a data transfer, the data is simply transferred and the process ends (406). In any other cases, if it's data alteration or command, these latters are dispatched to the related applications (408).

The method of the present invention further allows the web browser communicating 320 a publishing command to a distant server to have the data be stored in a distant storage server such as in a Cloud storage 322. The process may end when the data are transferred from the local web browser on the local computer device to the remote cloud storage server.

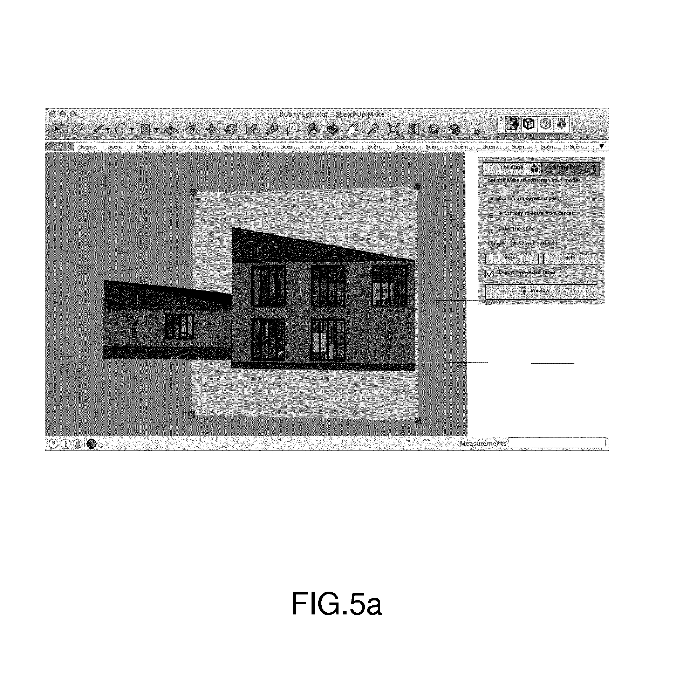

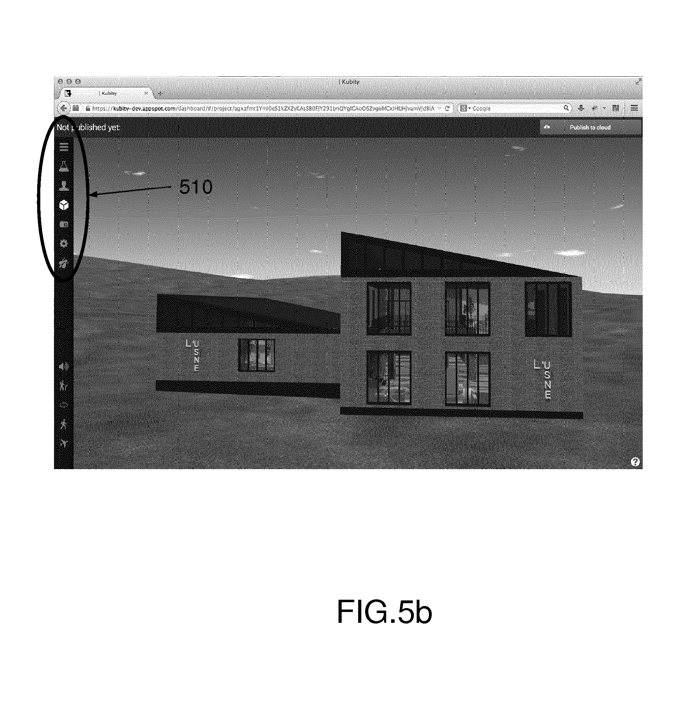

Figure 5a illustrates a 3D content created with a local native application, while figure 5b illustrates the same 3D content after transfer into the local web browser. Advantageously, the automatic and direct transfer according to the process of the invention allows an original 3D model to be transferred into a web environment in few seconds.

It is to be appreciated that the original scene on figure 5a is created with a local 3D native application within a static environment, such as with Google Sketch Up®, whereas the final scene on figure 5b contains the same model as the original one but displayed in real time in a web navigator in a dynamic environment.

As shown on the left of figure 5b, advantageously the web navigator offers a plurality of tools and functions (510) to enrich, modify, complete the environment around the original 3D model.

The present invention is particularly of interest for any commercial domain where interactive models are required to evaluate their impact into a specific real time environment, such in urbanism, architecture, design, interior design, industrial prototype, storyboard, crime scene reconstruction, education, or wedding reception planning.

The person skilled in the art will appreciate that the embodiment has been presented for purposes of illustration and description, and is not intended to be exhaustive nor limiting the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated.

It has to be appreciated that while the invention has been particularly shown and described with reference to a preferred embodiment, various changes in form and detail may be made therein without departing from the spirit, and scope of the invention. Specifically, the present invention is well suited and easily applicable by a person skilled in the art to any form, size of robot that allows a human interaction.

The present invention can take the form of a computer program product accessible from a computer-usable or computer-readable medium providing program code for use by, or in connection with a computer or any instruction execution system. For the purposes of this description, a computer-usable or computer-readable medium can be any tangible apparatus that can contain, store, communicate, propagate, or transport the program for use by, or in connection with the instruction execution system, apparatus, or device. The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

## Claims

1. A computer-implemented method of handling an original content generated with a desktop application operative on a computer device, the method comprises the steps of:
- receiving a query to transfer the original content to a web browser, wherein the web browser being operated on the computer device;
- communicating said query to a software application, wherein said software application being operated on said computer device;
- executing on said computer device said query by said software application;
and
- communicating by said software application the result of the executed query to said web browser.

2. The method of claim 1, wherein the communication between the software application and the web browser is exclusively executed locally on said computer device.

3. The method of any preceding claim wherein the communication between the software application and the web browser is operated without any local disk transfer.

4. The method of any preceding claim, wherein the query comprises data and/or commands.

5. The method of claim 4 wherein the executing step comprises the steps of encapsulating the data.

6. The method of any preceding claim further comprising the step of displaying said result on a web browser user interface of said computer device.

7. The method of claim 6 wherein the web browser comprises a plurality of tools and functions to enrich the scene around the original model.

8. The method of any preceding claim, wherein the executing step comprises the step of simplifying said model by said software application.

9. The method of claim 8, wherein the simplification is performed by using predefined heuristics.

10. The method of claim 9, wherein the simplification is associated with a plurality of simplified versions of the multi-dimensional model, each simplified version being associated with a predefined level of detail.

11. The method of any preceding claim, further comprising the step of having said web browser communicating a publishing command to a distant server.

12. The method of any preceding claim wherein the content is a 3D content.

13. The method of any preceding claim, wherein the software application is a plug-in.

14. The method of any preceding claim, wherein the communication step is performed with a WebSocket protocol.

15. A computer program comprising instructions for carrying out the steps of the method according to any one of claim 1 to 14 when said computer program is executed on a suitable computer device.

16. A system comprising means adapted to carry out the steps of the method according to any one of claims 1 to 14.
